# EUROPEAN PATENT APPLICATION

(11) **EP 4 566 867 A1**
(43) Date of publication of application: **11.06.2025**
(21) Application number: 23214476.6
(22) Date of filing: 06.12.2023
(51) Int. Cl.: B60L 53/30, B60L 53/65, B60L 53/66, H02J 7/00, B60L 53/16

(54) **COMMUNICATION, ACCESS CONTROL AND METERING MODULE AND SYSTEM FOR ELECTRIC VEHICLE CHARGING**

(71) Applicant: HeyCharge GmbH, 80333 München (DE)
(72) Inventor: Carde, Christopher, 80469 München (DE)
(74) Representative: DTS Patent- und Rechtsanwälte PartmbB

(57) **Abstract**

The present invention provides a communication, access control and metering module (10) for electric vehicle (EV) charging including a housing (20), electronic components (30), comprised in said housing (20) and including: a microcontroller; a metering means (30.1); a switching means (30.2), operatively connected to the metering means (30.1), and a connection means (30.3), configured and adapted for connection to a back-end (40) for user access control management and energy consumption billing; a power outlet means (50) in the shape of a socket, configured and adapted for connection to a charge cable (60), preferably a Mode 2 charge cable (60), and a power inlet means, configured and adapted for connection to an external electric power source (P). The present invention further comprises a system for EV charging comprising, inter alia, the above described a communication, access control and metering module (10).

## Description

The present invention belongs to the technical field of electric vehicle (EV) charging.

EV charging stations, also known as EV chargers or electric vehicle supply equipment (EVSE) are designed to supply electric power for charging plug-in electric vehicles.

EV charging stations may be located either in private or public areas.

In particular, the invention relates to a communication, access control and metering module and a system for EV charging.

Systems for EV charging are known in the art.

Usually, said known EV charging systems include an electric vehicle supply equipment (EVSE), connected to an electric power supply, and an EV charge cable, such as a Mode 3 charging cable.

For instance, an EVSE (also referred to as "wallbox") can be a module that is applied to or built into a wall or the like for the purpose of supplying electric power to an electric vehicle to be charged.

In the last developments, EVSEs may be connected to a back-end for user access control management and energy consumption billing (so called "smart" EVSEs).

A first, simplified approach is known as Mode 1.

Mode 1 contemplates direct connection of an electric vehicle to a common socket, without the provision of any specific safety system.

Due to its limitations, Mode 1 is typically used for charging electric bikes or scooters, while it is not used for charging bigger vehicles such as cars or the like.

The rated values for current and voltage in Mode 1 shall not exceed 16 A and 250 V in single-phase while 16 A and 480 V in three-phase.

A more developed approach is Mode 2.

Unlike Mode 1, Mode 2 contemplates the provision of a specific safety system between the point of connection to the electric power source (e.g., the electric network) and the electric car in charge.

This improves the overall safety conditions.

In particular, a Mode 2 EVSE includes a simple power outlet (e.g., a household outlet such as Schuko or equivalent thereof, or a lightweight industrial connector such as Blue CEE or equivalent thereof).

The Mode 2 EVSE is connected to the electric vehicle to be charged through a Mode 2 charge cable.

However, although cost-effective, Mode 2 cables have quite limited functionalities.

In particular, Mode 2 cables do not typically provide for "smart" functionalities such as user access control management and energy consumption billing.

The rated values for current and voltage for Mode 2 shall not exceed 32 A and 250 V in single-phase while 32 A and 480 V in three-phase.

Currently, the conventional approach in EV charging is Mode 3.

Mode 3 is widely used for the purpose of EV charging in public spaces, and allows for charging up to 32 A and 250 V in single-phase while up to 32 A and 480 V in three-phase.

In particular, Mode 3 involves the use of slow or fast AC chargers and a specific EV multi-pin socket with control and protection functions (SAE J1772 and IEC 62196-2).

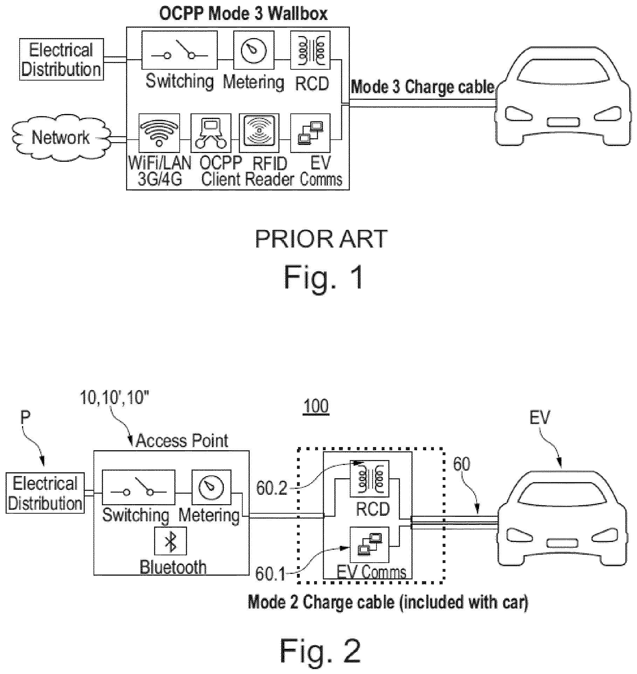

An example of a Mode 3 EV charging system including an Open Charge Point Protocol (OCPP) Mode 3 EVSE is schematically shown in Fig. 1.

The electric vehicle to be charged is connected to the OCPP Mode 3 EVSE through a Mode 3 charge cable.

The Mode 3 EVSE is permanently connected to an external electric power source (e.g., the electric network).

Mode 3 EVSEs have enhanced functionalities when compared, e.g., to Mode 2 EVSEs.

In particular, Mode 3 EVSEs are more commonly capable of connecting to a back-end for user access control management and energy consumption billing ("smart" functionalities).

Plugs and socket outlets that support Mode 3 are defined in IEC 61851-1.

In particular, Mode 3 allows the use of use either a Type 1 or a Type 2 connector (the latter being the current standard in Europe).

Nevertheless, Mode 3 EVSEs still have some drawbacks, in particular related to significantly high production costs.

In particular, the significantly high costs of Mode 3 EVSE are mainly determined by the following aspects:
- the cost of the microprocessor and the overall computing system design required to support internet protocol (IP) as well as the specific protocol used for communication to the back-end system (OCPP);
- the cost of the communication peripherals required for WAN communication, namely ethernet, 3G/4G/5G, WiFi, or equivalents thereof;
- the cost of the circuitry for communication with the vehicle (conforming with ISO 61851-1 standard for conductive charging of electric vehicles);
- the cost of the protective circuitry, namely the Residual Current Detection (RCD);
- the cost of the electric vehicle-side connectors (e.g., sockets or cable assemblies), which are particularly expensive (cf. type 2 or Mennekes in Europe, type 1 or J 1772 in United States or equivalents thereof), and
- the cost of handling the required Mode 3 EVSE power levels, which typically run between 3.7 kW and 22 kW.

The aforesaid cost-related drawbacks are even more apparent considering the upcoming wave of low-cost, mass-market electric vehicles.

A further evolution of Mode 3 charging is Mode 4.

Mode 4 allows for providing direct current.

Mode 4 requires a voltage rectifier external to the electric vehicle, to which a Mode 4 charge cable is connected.

Usually, Mode 4 charging stations have significantly increased dimensions when compared to Mode 3 (or previous) charging stations, this being due to the presence of the rectifier for transforming alternating current (AC) into direct current (DC) before it passes through the charge cable toward the vehicle.

Mode 4 allows for DC fast charging using a specific charging interface (in line with IEC 62196-3, e.g., CHAdeMO, or Combined Charging System (CCS).

Although being effective, Mode 4 as well shows significant cost-related drawbacks.

Thus, there is a strongly-felt need for an improved solution that allows to reduce the overall costs of the EV charging system, at the same time providing for "smart" functionalities such as user access control management and energy consumption billing.

It is therefore an object of the present invention to provide a communication, access control and metering module and a system for electric vehicle (EV) charging allowing to reduce the overall costs of the system without prejudice to its "smart" functionalities (e.g., user access control management and energy consumption billing).

This object is achieved by the provision of a communication, access control and metering module according to claim 1.

The present invention provides a communication, access control and metering module for electric vehicle (EV) charging.

The module includes a housing.

The module further includes electronic components, comprised in said housing.

In particular, the electronic components include a microcontroller.

Additionally, the electronic components include a metering means.

Additionally, the electronic components include a switching means, operatively connected to the metering means.

Additionally, the electronic components include a connection means, which is configured and adapted for connection to a back-end for user access control management and energy consumption billing.

The module further includes power outlet means in the shape of a socket.

The power outlet means are configured and adapted for connection to a charge cable, preferably a Mode 2 charge cable, for charging an electric vehicle.

The module further includes a power inlet means.

The power inlet means is configured and adapted for connection to an external electric power source such as the electric network.

The invention is based on the basic idea that, by providing a communication, access control and metering module that is configured and adapted to be used with a charge cable, preferably a Mode 2 charge cable, it is possible to use components (namely, a communication means, a vehicle connector means, and a residual current device (RCD)) of the Mode 2 charge cable, without the need of providing the same components again in the module, thereby overcoming the cost-related drawbacks of the prior art without prejudice to "smart" functionalities, such as user access control management and energy consumption billing.

Mode 2 charge cables are usually provided together with the electronic vehicle or plug-in hybrid.

The power outlet means may be external to the housing.

In such a case, the housing and the power outlet means are connected via an external wiring. In such a case, the housing only embeds the above-specified electronic components. Alternatively, the power outlet means may be part of the housing.

This allows for an even more compact design.

The power inlet means may include a plug.

Advantageously, the plug may be part of the housing.

The module may include a real time clock.

Further, the module may include a cryptography chip.

Still further, the module may include a display means.

Advantageously, the display means may include an LCD display means.

Alternatively, the display means may include a LED display means.

The connection means may be short-range connection means.

In particular, the short-range connection means may be a Bluetooth^{®} connection means.

Alternatively, the short-range connection means may be an ultra-wideband (UWB) connection means.

The present invention further provides a system for electric vehicle (EV) charging.

The system includes the module described above.

The system further includes a charge cable.

Preferably, the charge cable is a Mode 2 charge cable.

The Mode 2 charge cable includes vehicle communication means, a vehicle connector means, and a residual current device (RCD).

The module is configured and adapted to be operatively connected to the charge cable, preferably a Mode 2 charge cable.

The present invention further provides an alternative system for electric vehicle (EV) charging, in particular designed for micro-mobility vehicles.

Examples of such micro-mobility vehicles may include e-bikes, electric scooters or the like. The system includes the module described above.

The system further includes a charge cable suitable for use with micro-mobility vehicles. Preferably, said charge cable is a Mode 1 charge cable.

The module is configured and adapted to be operatively connected to the charge cable, preferably a Mode 1 charge cable.

In particular, the module may be equipped (only) with a short-range communication connection means (including the microcontroller), the metering means and a switch. This allows a very cheap and still reliable and fully functional design. Optional components may be the real time clock, a cryptography chip (functioning as a secure element), an LCD display and an LED display.

Further details and advantages of the present invention shall now be disclosed in connection with the drawings, where:
**Fig. 1** is a block diagram showing a system for EV charging including an OCCP Mode 3 EVSE and a Mode 3 charge cable, according to the prior art;
**Fig. 2** is a block diagram showing a system for EV charging according to the invention;
**Fig. 3** is a block diagram showing part of the electronic components of a communication, access control and metering module according to the invention;
**Fig. 4** is a perspective view of a communication, access control and metering module according to a first embodiment of the invention, having an external power outlet means in the shape of a socket;
**Fig. 5a** is a perspective view of the module of **Fig. 4****,** where the socket is omitted;
**Fig. 5b** is a view similar to that of **Fig. 5a****,** but seen from above;
**Fig. 9** is a view similar to that of **Fig. 5b****,** but in a larger scale and where a lid of the housing has been removed;

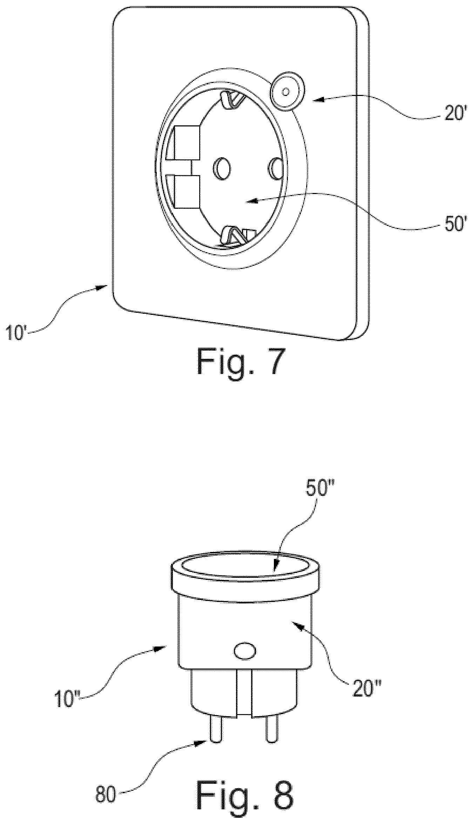

**Fig. 7** is a perspective view of a communication, access control and metering module according to a second embodiment of the invention;
**Fig. 8** is a perspective view of a communication, access control and metering module according to a third embodiment of the invention;

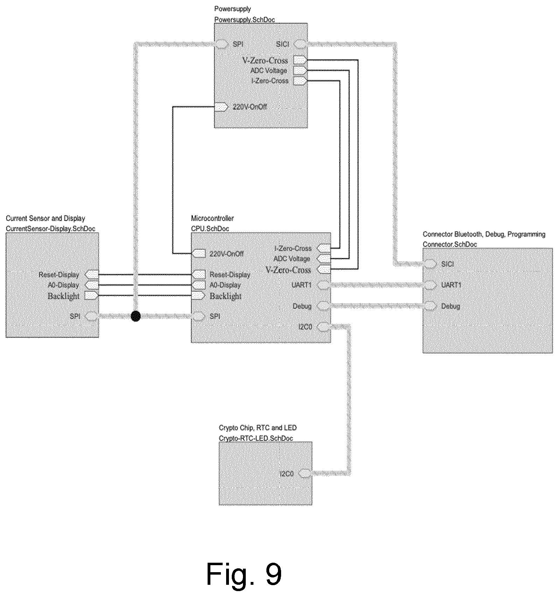

**Fig. 9** is a block diagram showing the electronic components of the communication, access control and metering module of the invention and their respective interactions, wherein the module further includes a display means and a cryptography chip;

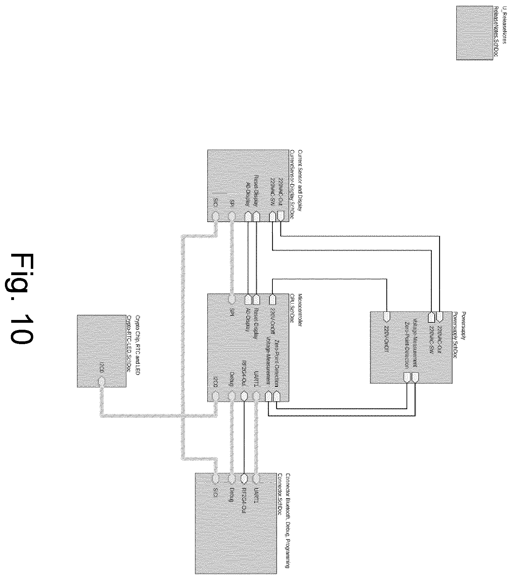

**Fig. 10** is a block diagram similar to that of **Fig. 9****,** but showing in detail the circuit plan of the electronic components.

**Fig. 2** provides a schematic overview of a system 100 for EV charging according to the invention.

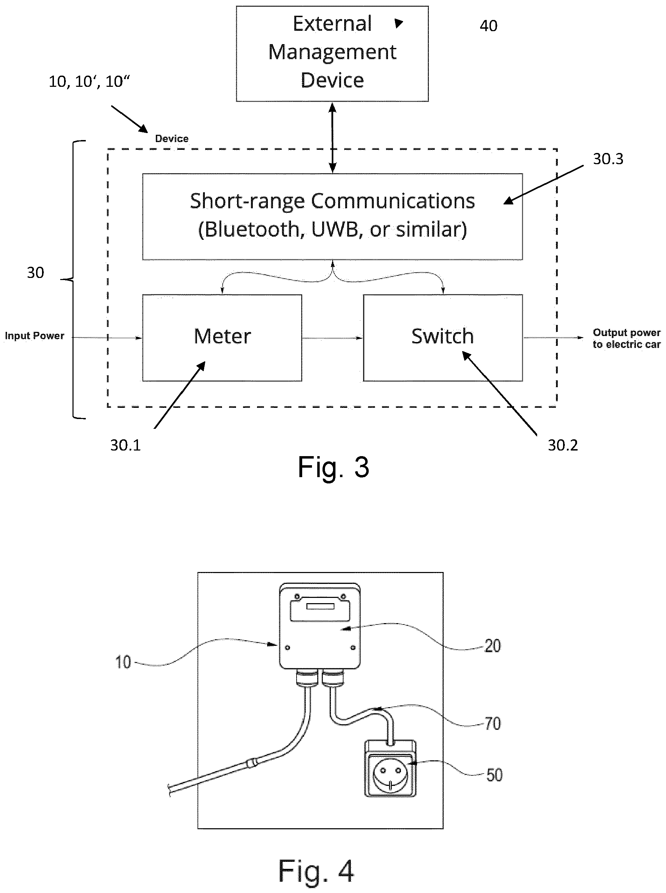

The system 100 may be implemented with a communication, access control and metering module 10, 10', 10" according to any of the below described embodiments of the invention (**Figs. 4 to 6****;** **Fig. 7; Fig. 8**).

The system further includes a charge cable 60.

In the present embodiment, the charge cable 60 advantageously is a Mode 2 charge cable 60.

The Mode 2 charge cable 60 includes an electronic vehicle communication means 60.1 (**Fig. 2**).

The Mode 2 charge cable 60 further includes a vehicle connector means.

The Mode 2 charge cable 60 further includes a residual current device (RCD) 60.2 (**Fig. 2**).

The Mode 2 charge cable 60 is usually provided together with an electronic vehicle or plug-in hybrid.

The communication, access control and metering module 10, 10', 10" is configured and adapted to be operatively connected to the charge cable, in particular a Mode 2 charge cable 60 for EV charging.

Not shown is that the invention further provides an alternative system for EV charging, in particular designed for use with micro-mobility vehicles.

Similar as above, the system may be implemented with the module 10, 10', 10" according to any of the below described embodiments of the invention (**Figs. 4 to 6****;** **Fig. 7; Fig. 8**).

The system further includes a charge cable suitable for use with micro- mobility vehicles.

In particular, in the present embodiment, said charge cable is a Mode 1 charge cable.

The module 10, 10', 10" according to the invention includes a housing 20, 20', 20.

The module 10, 10', 10" further includes electronic components 30.

The electronic components 30 are enclosed within the housing 20, 20', 20.

**Fig. 3** is a block diagram showing part of the electronic components 30 of the communication, access control and metering module 10, 10', 10" of the invention.

The electronic components 30 include a metering means 30.1.

The electronic components 30 further include a switching means 30.2, operatively connected to the metering means 30.1.

The electronic components 30 further include a connection means 30.3.

The connection means 30.3 is configured and adapted for connection to a back-end 40 for user access control management and energy consumption billing (**Fig. 3**).

Not shown in **Fig. 3** is that the electronic components 30 further include a microcontroller.

Advantageously, the module 10, 10', 10" may further include a real time clock (not shown in **Fig. 3**).

Further, the module 10, 10', 10" may include a cryptography chip (not shown in **Fig. 3**).

Still further, the module 10, 10', 10" may include a display means (not shown in **Fig. 3**). Preferably, the display means includes an LCD display means.

More preferably, the display means includes a LED display means.

A more detailed overview of the electronic components of the communication, access control and metering module 10, 10', 10" and their respective interactions is provided in **Figs. 9-10****.** Here, the module 10, 10', 10" is implemented with a display means and a cryptography chip. The module 10, 10', 10" includes a power outlet means 50, 50', 50", which is configured and adapted for connection to the Mode 2 charge cable 60.

In the shown embodiments, the power outlet means 50, 50', 50" is a socket (**Figs**. **4****,** **7** and **8**).

The module 10, 10', 10" further includes a power inlet means, which is configured and adapted for connection to an external electric power source P (e.g., the electric network).

As shown in **Fig. 3****,** the connection means 30.3 may be short-range connection means 30.3. For instance, the short-range connection means 30.3 may be a Bluetooth^{®} connection means.

Alternatively, the short-range connection means 30.3 may be an ultra-wideband (UWB) connection means.

Different kinds of connection means as well fall within the scope of the present invention, provided that they are suitable for connection to the back-end 40.

A communication, access control and metering module 10 according to a first embodiment of the invention is shown in **Figs. 4****,** **5a, 5b** and **6****.**

The module 10 includes the features already described above with reference to **Figs. 2****,** **3****,** **9** and **10****.**

In the following, the description of said features will be omitted for the sake of brevity.

In the present embodiment, the power outlet means 50 (i.e., a socket) are external to the housing 20.

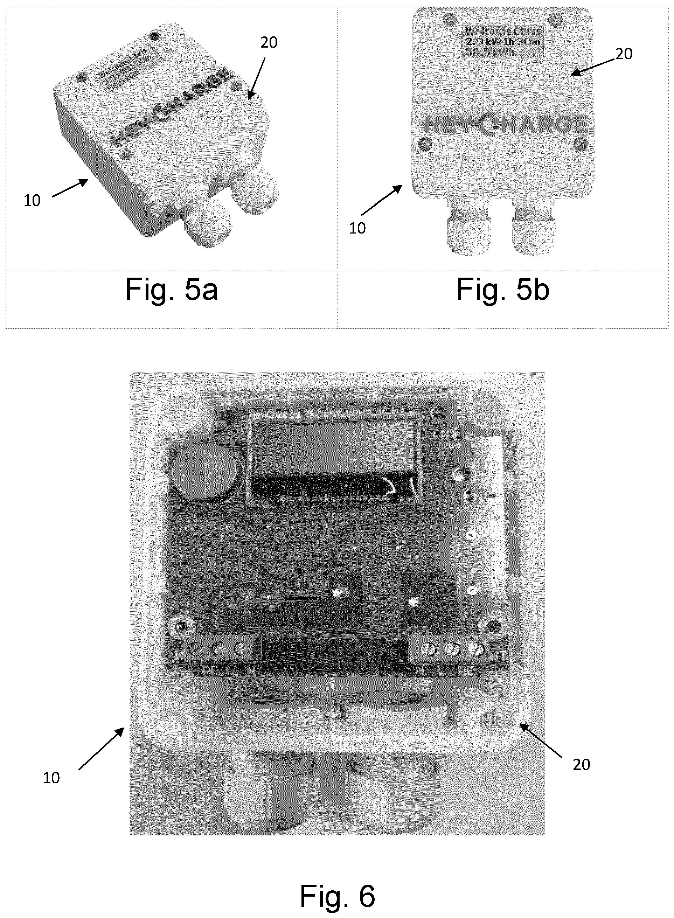

That is, only the electronic components 30 of the module 10 are included in the housing 20 (**Fig. 6**).

As shown in **Fig. 4****,** the power outlet means 50 (i.e., a socket) are operatively connected to the housing 20 through an external wiring 70.

A communication, access control and metering module 10' according to a second embodiment of the invention is shown in **Fig. 7****.**

The module 10' of the second embodiment only differs from the module 10 of the first embodiment in that the power outlet means 50' (i.e., a socket) are part of the housing (**Fig. 7**). This allows for a more compact design.

A communication, access control and metering module 10" according to a third embodiment of the invention is shown in **Fig. 8****.**

The module 10" of the third embodiment is similar to the module 10" of the second embodiment.

Also in this case, the power outlet means 50" (i.e., a socket) are part of the housing (**Fig. 8**).

The module 10" of the present embodiment only differs from the module 10' of the second embodiment in that the power inlet means include a plug 80, the plug 80 being part of the housing 20".

By the provision of a communication, access control and metering module 10, 10', 10" that is configured and adapted to be used with a Mode 2 charge cable, components of the Mode 2 charge cable (namely, a communication means, a vehicle connector means, and residual current device (RCD)) can be used without the need of providing the same components again within the module 10, 10', 10".

Accordingly, the overall costs of the module 10, 10', 10" can be significantly reduced without prejudice to the "smart" functionalities of the module 10, 10', 10", such as user access control management and energy consumption billing.

### References

- 10, 10', 10": Communication, access control and metering module
- 20, 20', 20": Housing
- 30: Electronic components
- 30.1: Metering means (electronic components)
- 30.2: Switching means (electronic components)
- 30.3: Connection means (electronic components)
- 40: Back-end
- 50, 50', 50": Power outlet means / socket
- 60: (Mode 2) charge cable
- 70: External wiring
- 80: Plug (power inlet means)
- P: External power source
- EV: Electric vehicle

## Claims

1. A communication, access control and metering module (10, 10', 10") for electric vehicle (EV) charging including:
a housing (20, 20', 20"),
electronic components (30), comprised in said housing (20, 20', 20") and including:
a microcontroller;
a metering means (30.1);
a switching means (30.2), operatively connected to the metering means (30.1), and
a connection means (30.3), configured and adapted for connection to a back-end (40) for user access control management and energy consumption billing,
a power outlet means (50, 50', 50") in the shape of a socket, configured and adapted for connection to a charge cable (60), preferably a Mode 2 charge cable (60), and
a power inlet means, configured and adapted for connection to an external electric power source (P).

2. The module (10) according to claim 1,
**characterized in that**
the power outlet means (50) is external to the housing (20) and is operatively connected to the housing (20) through an external wiring (70).

3. The module (10', 10") according to claim 1,
**characterized in that**
the power outlet means (50', 50") is part of the housing (20', 20").

4. The module (10") according to any one of the preceding claims,
**characterized in that**
the power inlet means includes a plug (80), said plug being (80) part of the housing (20").

5. The module (10, 10', 10") according to any one of the preceding claims,
**characterized in that**
the module (10, 10', 10") comprises at least one real time clock.

6. The module (10, 10', 10") according to any one of the preceding claims,
**characterized in that**
the module (10, 10', 10") comprises at least one cryptography chip.

7. The module (10, 10', 10") according to any one of the preceding claims,
**characterized in that**
the module (10, 10', 10") comprises at least one display means, preferably an LCD display means, more preferably a LED display means.

8. The module (10, 10', 10") according to any one of the preceding claims,
**characterized in that**
the connection means (30.3) is a short-range connection means (30.3).

9. The module (10, 10', 10") according to claim 8,
**characterized in that**
the short-range connection means (30.3) is a Bluetooth^{®} connection means.

10. The module (10, 10', 10") according to claim 8,
**characterized in that**
the short-range connection means (30.3) is an ultra-wideband (UWB) connection means.

11. A system (100) for electric vehicle (EV) charging, at least comprising:
- the communication, access control and metering module (10, 10', 10") according to any one of claims 1 to 10, and
- a charge cable (60) including an electronic vehicle communication means (60.1), a vehicle connector means, and a residual current device (RCD) (60.2),
wherein the module (10, 10', 10") is configured and adapted to be operatively connected to the charge cable (60) for EV charging.

12. The system (100) according to claim 11,
**characterized in that**
the charge cable (60) is a Mode 2 charge cable (60).

13. A system for electric vehicle (EV) charging, at least comprising:
- the communication, access control and metering module (10, 10', 10") according to any one of claims 1 to 10, and
- a charge cable suitable for use with micro-mobility vehicles,
wherein the module (10, 10', 10") is configured and adapted to be operatively connected to the charge cable for EV charging.

14. The system according to claim 13,
**characterized in that**
the charge cable is a Mode 1 charge cable.
